# EUROPÄISCHE PATENTSCHRIFT

(11) **EP 3 740 726 B1**
(45) Veröffentlichungstag und Bekanntmachung des Hinweises auf die Patenterteilung: **14.12.2022**
(21) Anmeldenummer: 18702556.4
(22) Anmeldetag: 15.01.2018
(51) Int. Cl.: F24S 60/30, F24D 17/00

(54) **THERMOSOLARE WARMWASSERAUFBEREITUNGSANLAGE**
THERMOSOLAR HOT-WATER PREPARATION SYSTEM
INSTALLATION DE TRAITEMENT D'EAU CHAUDE THERMOSOLAIRE

(43) Veröffentlichungstag der Anmeldung: 25.11.2020
(73) Patentinhaber: RKK Beteiligungs GmbH, 9300 St. Veit an der Glan (AT)
(72) Erfinder: KULNIG, Mario, 9064 Magdalensberg (AT)
(74) Vertreter: Riebling, Peter
(86) Internationale Anmeldenummer: PCT/IB2018/000009
(87) Internationale Veröffentlichungsnummer: WO 2019/138259

(56) Entgegenhaltungen:
- DE-A1- 19 517 471
- DE-A1-102008 041 715
- FR-A1- 2 687 768
- US-A- 4 586 227
- US-A- 4 779 610
- US-A1- 2011 146 665

## Beschreibung

Die Erfindung betrifft eine thermosolare Warmwasseraufbereitungsanlage sowie ein Verfahren zu derer Herstellung.

Eine derartige Warmwasseraufbereitungsanlage ist beispielsweise mit dem Gegenstand der DE 198 444 50 A1 bekannt geworden. Diese Druckschrift offenbart eine Solarspeicheranlage mit einem Sonnenkollektor, der mit einem in einem Solarspeicher angeordneten Wärmetauscher verbunden ist, in dessen unterem Bereich eine Kaltwassereinspeisung mündet und dessen oberer Bereich mit einer Brauchwasserleitung in Verbindung steht. Von der Brauchwasserleitung zweigt eine Zirkulationsleitung ab, in der eine Zirkulationspumpe angeordnet ist, die oberhalb der Kaltwassereinspeisung in den Solarspeicher mündet.

Beim Betrieb führt die Sonneneinstrahlung auf den Sonnenkollektor zu einer Erwärmung des Wassers im Bereich des Sonnenkollektors, wobei das Wasser mittels der Kollektor-Umwälzpumpe über den Wärmetauscher umgewälzt wird. Dadurch wird das Wasser im Solarspeicher erwärmt. Diese Solarspeicheranlage bildet jedoch keine bauliche Einheit mit dem Solarspeicher, sondern verwendet einen außerhalb des Speichers verlaufenden Sonnenkollektor.

Solche Sonnenkollektoren sind allgemein zur Umwandlung von Sonnenstrahlung in Wärmeenergie bekannt. Die Wärme kann zur Heizung, Kühlung, zur Wasserdesinfektion, -entsalzung usw. verwendet werden. Meist wird dabei ein flüssiger Wärmeträger (z.B. Öl oder Wasser) aufgeheizt. Zentraler Bestandteil des Kollektors ist der Solarabsorber, der die Strahlungsenergie der Sonne in Wärme umwandelt und diese an einen ihn durchfließenden Wärmeträger abgibt. Mit Hilfe dieses Wärmeträgers wird die Wärme aus dem Kollektor abgeführt (z. B. über Wärmetauscher) und anschließend direkt verwendet oder gespeichert.

Um die unvermeidlichen Wärmeverluste zu reduzieren, ist eine gute Wärmedämmung des Absorbers gegenüber der Umgebung notwendig.

Häufig werden sogenannte Flachkollektoren verwendet, wobei die durch eine Glasplatte einfallenden Sonnenstrahlen auf den Solarabsorber treffen. Beim Auftreffen der Sonnenstrahlen wird nahezu der gesamte Spektralbereich des Lichtes absorbiert. Die dabei freiwerdende Wärme soll nicht verloren gehen, weshalb der Kollektor allseitig wärmegedämmt ist. Die konvektive Wärmeabgabe nach oben in Richtung Himmel wird durch eine oder zwei Glasscheiben verringert.

Der erhitzte Absorber überträgt die Wärme auf eine in fest mit dem Absorber verbundenen Kupfer- oder Aluminiumrohren strömende Wärmeträgerflüssigkeit (Wasser/Glycol, Sole, Öl, sogenannte Solarflüssigkeit). Sie transportiert die Wärme zu einem Verbraucher oder einem Wärmespeicher.

Die Wärmedämmung soll Wärmeverluste des Kollektors an der sonnenabgewandten Seite (=Rückwand) möglichst gering halten.

In Sonnenkollektoren können auf Grund der hohen Temperaturen bei Leerlauf nur temperaturbeständige Dämmmaterialien verwendet werden. Besonders eignen sich z. B. Mineralwolle oder Schaumglas; bedingt sind auch Holzfaserdämmplatten einsetzbar. Polyurethanschaum und andere sind nur in weniger beanspruchten Bereichen verwendbar.

Der optimale Arbeitsbereich reicht bis zu einer Temperatur von etwa 100°C. Die Stillstandtemperatur liegt bei etwa 160°C bis 200°C, d.h. es kommt zu einem starken Leistungsrückgang bei Temperaturen über 100°C.

Das Medium ist üblicherweise ein Gemisch von Wasser und Glykol; letzteres dient dem Frostschutz. Da die Verdampfungstemperatur dieses Mediums ca. 120 Grad Celsius beträgt muss die, Anlage abgeschaltet werden, sobald diese Temperatur in einem der Kollektoren erreicht ist. Die Überhitzung und der daraus folgende Stillstand sind die Ursache für zahlreiche Probleme mit thermischen Solaranlagen.

Die DE102 012 008 877 A1 zeigt eine Vorrichtung zur Temperaturbegrenzung in einem thermischen Solarkollektor, insbesondere in einem Flachkollektor, der über ein Übertragungsmedium Wärme in einen Speicher überträgt. Die Temperaturbegrenzung wird durch Abdeckung des Kollektors mit einer Doppelglasscheibe mit integriertem Rollo erreicht, das durch einen Elektromotor geschlossen und geöffnet werden kann. Durch die damit erreichte Temperaturbegrenzung kann die Kollektorfläche beliebig vergrößert werden und der Ertrag einer damit ausgerüsteten Solaranlage wird erheblich gesteigert.

Nachteilig an dieser Vorrichtung ist jedoch, dass das Rollo über teurere Sensoren gesteuert werden muss, welche eine Überschreitung einer Grenztemperatur registrieren um dann das Rollo zu schließen.

Die US 2011/146665 A1 offenbart eine thermosolare Wasseraufbereitungsanlage umfassend einen geschlossenen Tank als Warmwasserspeicher, dessen sonnenseitige Oberseite von einer transparenten Scheibe bedeckt ist, durch welche die Sonnenstrahlen hindurch strahlen und eine Flüssigkeit im Inneren des Tanks erwärmen, wobei die Flüssigkeit die durch die Sonnenstrahlen aufgenommene Energie an einen im Tank angeordneten Wärmetauscher abgibt. Der Tank wird drucklos betrieben und ist von einer Wärmeisolierung aus aufgeschäumten Kunststoff umgeben. Der Tank ist an seiner sonnenzugewandten Seite durch die transparente Scheibe abgedeckt und weist eine solarselektive Beschichtung auf.

Der Erfindung liegt deshalb die Aufgabe zugrunde, eine thermosolare Warmwasseraufbereitungsanlage der eingangs genannten Art kostengünstig so weiter zu bilden, dass auch bei hohen Temperaturen eine optimale und kostengünstige Wärmeisolation gegeben ist.

Die der Erfindung zugrunde liegende Aufgabe wird durch die Merkmale des unabhängigen Patentanspruches gelöst, während vorteilhafte Ausgestaltungen und Weiterbildungen der Erfindung den Unteransprüchen entnommen werden können. Damit besteht der Vorteil, dass die Halterung des Stahlblechtanks gleichzeitig als Wärmedämmung ausgebildet ist, weil die verwendeten Profilteile aus einem aufgeschäumten EPP-Kunststoff bestehen, die leicht zusammen gesteckt und mit einander verbunden werden können.

Die vorliegende Erfindung ist jedoch nicht auf die Verwendung eines Stahlblechtanks beschränkt. Neben einem Tank aus Stahlblech wird auch ein Tank aus einem thermoplastischem Kunststoff, z.B. Polyethylen, bevorzugt PE-HD oder PE-X, also ein vernetztes Polyethylen mit einer Dauerbelastbarkeit von 100°C bis 120°C oder PP mit/ohne Glasfaserfüllung, beansprucht.

Ein solcher Tank aus Kunststoff kann mittels Rotationsformverfahren, d.h. einem drucklosen Verfahren zur Herstellung von Hohlkörpern aus thermoplastischem Kunststoff hergestellt sein.

Alternativ kann der Tank aus thermoplastischem Kunststoff durch ein Tiefziehwerkzeug zur Herstellung des Unterteils und einer anschließenden Kunststoff-Aufschweißung der thermoplastischen Deckplatte hergestellt werden.

In beiden Fällen wird ein schwarz eingefärbter Kunststoff mit guter IR-Absorption verwendet und entsprechende Halterungen bzw. Ausführungen für die Aufnahme der Standbeine integriert werden. Zur Versteifung werden Rippen bzw. allg. Verstärkungsstrukturen verwendet.

In einer ersten Ausführung weist die sonnenzugewandte Seite des Stahlblechtanks lediglich eine solarselektive Beschichtung auf.

In einer zweiten Ausführung ist der Warmwasserspeicher ein drucklos betriebener Stahlblechtank, der zwischen einer transparenten Schreibe und der Oberseite eine solarselektive Beschichtung aufweist und dessen übrige Seiten, sowie auch die Unterseite eine thermische Isolation aus EPP-Formteilen aufweist.

Somit weist der drucklos betriebene Stahlblechtank eine sonnenseitige, solarselektive Beschichtung und eine thermische Isolation aus EPP-Formteilen auf, wobei sonnenseitig eine transparente Scheibe mit einem entsprechenden Abstand zur solarselektiv beschichteten Oberseite des Stahltanks angeordnet ist.

In einer weiteren Ausbildung der vorliegenden Erfindung wird zwischen der transparenten Scheibe und der Oberseite des Stahltanks mit der solarselektiven Beschichtung eine zusätzliche Platte bzw. Folie eingesetzt, womit die Abkühlung während der Nachtstunden bzw. der kalten Phase,ohne wesentliche Sonneneinstrahlung reduziert werden kann. Als Platte kann beispielhaft eine Polycarbonat Stegplatte verwendet werden und als Folie kann eine Folie mit einem UV-transparenten und einem UV-stabilisierten (z.B. reflektierenden) Bereich aus einem thermoplastischen Kunststoff verwendet werden.

In den Stahlblechtank wird der Wärmetauscher in Form eines druckdicht abgedichteten Edelstahlwellrohres eingebracht und verläuft willkürlich durch den Innenraum des Tanks.

Das Edelstahlwellrohr wird mit zwei EPDM (Ethylen-Propylen-Dien-Kautschuk) Durchführungsteilen thermisch isoliert und wasserdicht durch Öffnungen in der Stahlblechwandung verlegt.

Eine solche erfindungsgemäße Warmwasseraufbereitungsanlage ist für Gegenden entwickelt, in denen es eine ausreichende und kontinuierliche Verfügbarkeit an Sonne bzw. an solarer Wärmestrahlung gibt und wo eine einfache Ausführungsform mit geringen Investitions- und Betriebskosten gefordert ist.

Der erfindungsgemäße Stahlblechtank ist kastenförmig ausgebildet und besitzt eine Blechdicke von wenigen 0,1 mm, bevorzugt hierbei sind 0,7 mm bis maximal 2,0 mm. Der Stahlblechtank kann einfach aus Blechbahnen geschnitten und anschließend abgekantet bzw. verformt werden.

Anschließend werden die einzelnen Blechteile wasserdicht und lunkerfrei miteinander verschweißt, sodass ein quaderförmiger Körper gebildet wird. Neben der bevorzugt verwendeten Laserschweißtechnik können auch andere, weniger druckbeständige Schweiß- und Lötverfahren verwendet werden, da der Tank druckfrei betrieben wird und die gesamte Temperatur des Warmwasserspeichers 100°C nicht überschreitet.

Eine typische Baugröße des Stahlblechtanks beträgt etwa 2.100 mm x 800 mm x 90 mm und dient zur Aufnahme von etwa 150 Liter Wasser.

Die Oberseite des Stahlblechtanks weist eine mehrschichtige solarselektive Beschichtung auf, welche die Wärme besonders gut aufnimmt und leitet. Während in Westeuropa üblicherweise eine hochselektive Beschichtung mit 95% Absorption (Alpha) und 5% Reflexion (Epsilon) verwendet wird, kann in sonnenintensiveren Regionen auf ein kostengünstigeres Verhältnis zurückgegriffen werden.

In solchen Regionen ist eine einfache Solarlackierung mit etwa 30%-90% IR-Absorption und 30% bis 90% IR-Reflexion bzw. IR-Emission
ausreichend, um das Wasser im Stahlblechtank auf über 60°C zu erwärmen.

Der erfindungsgemäße Stahlblechtank wird schräg zur Sonne mit einem Anstellwinkel von beispielhaft 20° bis 40° aufgestellt. Diese Schrägstellung wird durch die unterschiedliche Länge der Standbeine festgelegt und kann an die baulichen bzw. klimatischen Gegebenheiten angepasst werden.

In einer weiteren Ausführung der Erfindung sind die Standbeine in der Höhe verstellbar ausgeführt.

Die Standbeine können steckbar, schraubbar oder klemmbar mit dem Warmwasserspeicher verbunden werden.

Um eine nächtliche Abkühlung bzw. eine Abkühlung bei Schlechtwetter zu reduzieren wird der Stahlblechtank seitlich sowie an der Unterseite mit EPP-(expandierter Polypropylenschaumstoff) Formteilen thermisch isoliert.

Der Vorteil der Verwendung von EPP-Formteilen liegt nicht nur in den günstigen Werkzeug- und Vorrichtungskosten und damit in den Herstellkosten, sondern auch in den geringeren Abmessungen und damit der leichteren und einfacheren Manipulierbarkeit.

Die verwendeten EPP-Formteile stehen oberseitig des Stahltanks, d.h. in Richtung der Sonneneinstrahlung, über die Seitenkante des Stahltanks hervor. In diesem überstehenden Bereich weisen die Formteile eine nutartige Aussparung auf, in die eine transparente Scheibe eingebaut werden kann. Bevorzugt wird die Scheibe in die nutartige Aussparung geschoben, bevor die Formteile zusammengebaut und fixiert werden.

Durch die Ausführung der EPP-Formteile in vier baugleiche Teile wird erreicht, dass nur ein Formteilwerkzeug benötigt wird und die transparente Scheibe montagemäßig sehr einfach in die Nut geschoben werden kann. Die vier EPP-Formteile können nach der Montage miteinander verklebt werden bzw. mit Halteelementen miteinander fixiert werden.

Bei Verwendung eines Klebers wird ein UV beständiger 2 Komponenten-Kleber bevorzugt.

Diese Fixierung der vier EPP-Formteile kann grundsätzlich auch über zueinander zusammenfügbaren Hinterschnitten in den EPP-Formteilen erfolgen.

Die Wandstärke der verwendeten EPP-Formteile wird nach den örtlichen klimatischen Verhältnissen und den gewünschten thermischen Isoliereigenschaften gewählt und liegt in einem Bereich von 10mm bis 100mm, typischerweise zwischen 30 mm bis 70mm.

Durch die Verwendung dieser gleichartigen Formteile können die Kosten für die Isolation sehr geringgehalten werden und trotz alledem eine technisch hochwertige Lösung erreicht werden.

Grundsätzlich ist auch die Verwendung eines einteiligen oder zweiteiligen EPP-Formteils möglich, allerdings müssen dann höhere Nachbearbeitungskosten der Formteile berücksichtigt werden.

Zusätzlich weisen die EPP-Formteile Aussparungen in den Eckbereichen auf, die zur Durchführung der Standbeine, für die Zu- und Ableitung des Nutzwassersystems oder die Zugänglichkeit der Befüllungsöffnungen des Stahlblechtanks vorgesehen sind.

Als transparente Scheibe dient eine PC-Stegplatte (PC ... Polycarbonat; UVbeständige Ausführung) mit hoher solarer Transparenz und sehr guten thermischen Isoliereigenschaften. Zusätzlicher Vorteil dieser PC-Stegplatte ist das sehr geringe Gewicht.

In einer weiteren Ausführungsform wird ein 2,0 mm bis 3,2 mm dickes Solarglas verwendet. Derartige Solargläser können kostengünstig in der Form eines Floatglases bzw. Flachglases mit einer thermischen Behandlung bzw. Vorspannung, i.A. durch eine Erwärmung über 620°C und einer anschließend raschen Abkühlung, hergestellt werden und werden auch als Einscheiben-Sicherheitsglas (ESG) bezeichnet.

Im vorliegenden Fall ist die Verwendung von Solarglas bzw. Weißglas von Vorteil, da hierbei eine höhere Transparenz für solare Energie gegeben ist. Zusätzlich können Antireflexstrukturen oder Antireflexbeschichtungen verwendet werden.

Der Abstand der transparenten Scheibe zur solarselektiven Beschichtung der sonnenseitigen Seite des Stahlblechtanks wird je nach Anforderungen und Gegebenheiten mit 5 mm bis 70 mm, typisch 30mm gewählt. Bei einem solchen Abstand treten je nach Schräglage und Größe der thermosolaren Warmwasseraufbereitungsanlage keine Luftströmungen zwischen der Scheibe und der Beschichtung auf, womit eine optimale thermische Isolation gewährleistet wird. Dadurch können bei unterschiedlicher Schräglage und Größe der thermosolaren Warmwasseraufbereitungsanlage thermisch bedingte Konvektionsluftströmungen vermieden werden, womit eine optimale thermische Isolation gewährleistet wird.

Nach der Herstellung des Stahlblechtanks wird ein Edelstahlwellrohr eingeführt, das frei im Inneren des Tanks verläuft und je nach Kontakt mit den Wandungen von der Einschubrichtung abgelenkt wird, bis es an einer gewünschten Seite des Stahlblechtanks wieder aus dem Tank heraus geführt wird. Dabei wird eine willkürliche bzw. zufällig gewellte Lage des Edelstahlwellrohrs im Tank erreicht.

Herstellungstechnisch hat sich dieses Verfahren als kostengünstig erwiesen und in Bezug auf den Wirkungsgrad konnte kein wesentlicher Unterschied zu einer bewussten bzw. bestimmten Verlegeform gefunden werden.

In einer weiteren Ausführungsform werden die Zu- und Ableitungen nur auf einer der Seiten des Stahlblechtanks angebracht, wobei die Zu- und Ableitungen in einem Abstand von etwa 100 mm positioniert sind und derart eine einfache Verrohrung nur von einer Seite möglich ist.

Die Durchführung der Stahlwellrohrenden durch Öffnungen in den Stahlblechtank hinein und an einer anderen Seite wieder heraus, erfordert eine thermische Isolation, sowie eine wasserdichte Abdichtung. Dies wird durch die Verwendung von EPDM (Ethylen-Propylen-Dien-Kautschuk) Dichtelementen mit zwei Stahl-Schaubelementen erreicht, durch die das Wellrohr an der Öffnung durchgeführt wird.

Dazu wird eine Gewindemutter mit ihrer Längsachse konzentrisch zur Öffnung verdrehgesichert an einer Wand des Stahlblechtanks befestigt. Die Gewindemutter besitzt ein Innengewinde, in das eine hohle Dichtschraube einschraubbar ist. Durch das Einschrauben der Dichtschraube in die Gewindemutter wird das in der Gewindemutter und das an der Wandung des Stahlblechtank befindliche Dichtelement verformt und dichtet das durch die Öffnung geführte Wellrohr ab.

In die Öffnung und somit auch in die Gewindemutter wird das das Wellrohr umschließende Dichtelement eingesetzt und durch die mit der Überwurfmutter zusammenwirkende Dichtschraube deformiert.

Durch das Zusammenwirken der Dichtschraube und der Gewindemutter wird das auf dem Außenumfang des Wellrohrs befindliche EPDM Dichtelement verformt und kraftschlüssig verbunden, womit Wasserdichtheit erreicht wird.

Der Stahlblechtank mit dem eingelegten Edelstahlwellrohr-Wärmetauscher wird über Befüllung- bzw. Belüftungsöffnungen mit einer Flüssigkeit befüllt, wobei bevorzugt Wasser als Flüssigkeit verwendet wird. Das Wasser wird als Primärflüssigkeit erwärmt und gibt die Energie an das Wellrohr bzw. an das Trägermedium im Wellrohr ab.

Eine solche Befüllungsöffnung hat einen Öffnungsdurchmesser von 10 mm bis etwa 70 mm und wird nach der Befüllung mit Verschlusselementen verschlossen. Ein solches Verschlusselement weist eine Öffnung mit ca. 1 mm bis 5 mm Lochweite auf, bevorzugt werden 3 mm Durchmesser verwendet.

Versuche des Anmelders haben ergeben, dass durch eine Verwendung von Verschlußelementen mit Öffnungen im 1,0mm bis etwa 6,0mm, typisch 3,0mm, die Verdunstung während eines Betriebsjahres derart gering gehalten werden kann, dass keine Nachbefüllung erforderlich ist. Ein derartig geringer Durchmesser hält den Verlust des Wassers durch Verdunstung bzw. Verdampfung in Grenzen und ein Nachfüllen ist erst nach langer Betriebszeit und hoher Temperaturbelastung erforderlich.

Von dem Erfinder durchgeführte Tests haben ergeben, dass in einer moderaten Umgebung eine Nachfüllung erst nach einem Jahr Betriebszeit erforderlich ist.

Auf eine Wasserstandsanzeige kann daher grundsätzlich verzichtet werden, ist jedoch ebenfalls integrierbar.

Versuche des Anmelders haben ergeben, dass die Zuführung von Additiven in das Wasser zur Vermeidung von Rost im Stahlblechtank in den meisten Fällen entfallen kann, jedoch optional möglich ist.

Durch die Verwendung von Edelstahlwellrohren mit einer Stahlqualität gemäß 1.44xx (molybdänhaltige Nichtrostende Stahlqualität) ist die Verwendung des warmen Nutzwassers als Trinkwasser möglich. Ebenso ist durch die Stahlqualität eine Verwendung in einem Schwimmbad mit Chlor- oder Salzhaltigem Wasser möglich.

Höherwertige Stahlqualitäten bzw. Stahlqualitäten mit den gewünschten widerstandsfähigen Eigenschaften bzgl. chemischen Angriffen können ebenfalls verwendet werden und weisen i.A. einen hohen Chrommassengehalt von über 10,5 % auf.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Es zeigen:
- Figur 1:: schematische Schrägansicht der thermosolaren Wasseraufbereitungsanlage (1),
- Figur 2:: schematische seitliche Ansicht des Stahlblechtanks (2) mit den Standbeinen (11) ohne EPP-Formteile,
- Figur 3: einen schematischen Schnitt in seitlicher Ansicht durch eine thermosolare Wasseraufbereitungsanlage (1) mit den vier EPP-Formteilen (5),
- Figur 4:: eine schematische Draufsicht auf den Stahlblechtank (2) mit dem willkürlich bzw. zufällig angeordneten Edelstahlwellrohr (3) und den EPDM Durchführungen (15).

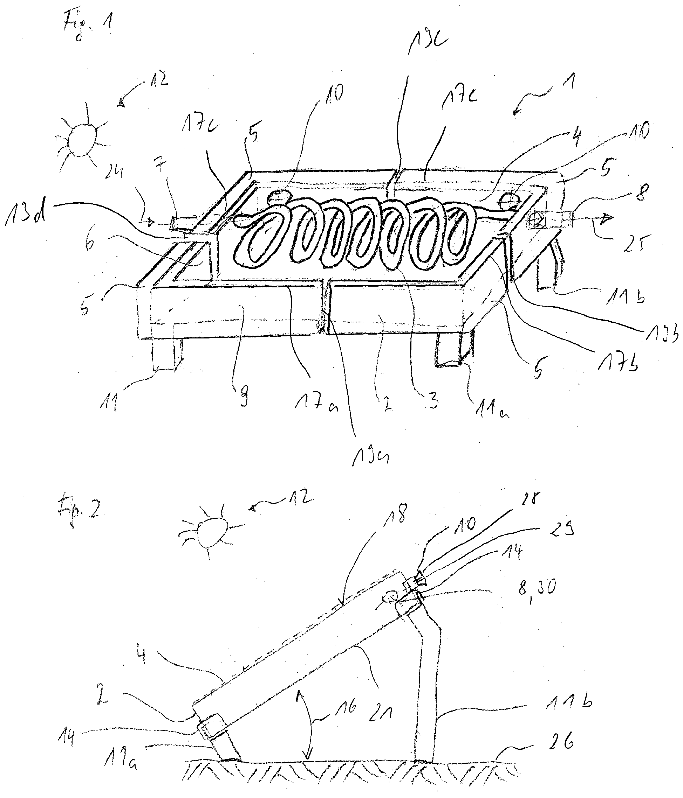

In Figur 1 ist eine schematische Schrägansicht der thermosolaren Wasseraufbereitungsanlage 1 dargestellt. Der Warmwasserspeicher 2, als Kernstück der thermosolaren Wasseraufbereitungsanlage, wird von mindestens vier Standbeinen 11 getragen.

Zur optimalen Ausrichtung des Warmwasserspeichers 2 in Richtung Sonne 12 wird dieser mit einer entsprechenden Schräglage (Winkel 16, Figur 2) aufgestellt. Diese Schräglage wird durch unterschiedlich lange Standbeine 11 erreicht, wobei die hinteren Standbeine 11b länger ausgebildet sind als die vorderen Standbeine 11a. Der Winkel 16 der Schräglage kann je nach den geografischen bzw. örtlichen Gegebenheiten durch die Wahl der unterschiedlich langen Standbeine 11a, 11b angepasst werden.

Der Warmwasserspeicher 2 ist bevorzugt als kastenförmiger Stahlblechtank mit einigen wenigen 0,1 mm Stahlblechdicke, typisch 0,7 mm bis maximal 2,0 mm ausgebildet.

Die zur Sonne 12 gerichtete Oberseite des Warmwasserspeichers 2 ist mit einer mehrschichtigen solarselektiven Beschichtung 4 versehen.

Der Warmwasserspeicher 2 weist mindestens eine Befüllung- bzw. Belüftungsöffnung 10 auf. Bevorzugt werden zwei derartige Öffnungen 10 verwendet, wobei diese Öffnungen 10 nach der Befüllung mit der Flüssigkeit 9, mit Verschlusselementen 28 verschlossen werden.

Ein solches Verschlusselement 28 weist eine Belüftungsloch 29 mit ca. 1 mm bis 5 mm Lochweite auf, bevorzugt werden 3 mm Durchmesser verwendet.

Zur thermischen Isolation des Stahlblechtanks 2, während der kühlen Nachtzeiten bzw. in Zeiten ohne Sonneneinstrahlung, werden EPP-Formteile 5 um den Außenumfang des Stahlblechtanks angeordnet. Figur 1 zeigt vier weitestgehend gleichförmige EPP-Formteile 5 die alle vier Seiten 17a-17d des Warmwasserspeichers 2 umschließen und zwischen sich die Oberfläche 18 (Figur 2) des Wasserspeichers frei lassen. Die vier EPP-Formteile berühren sich an den Kontaktflächen 19a-19d, welche sich mittig den einzelnen Seiten 17a-17d befinden. Somit umschließt jedes EPP-Formteil eine komplette Ecke des Warmwasserspeichers und zwei halbe Seitenflächen, welche in einem Winkel von 90° zueinander angeordnet sind.

Zwar lassen die EPP-Formteile 5 die der Sonne zugewandten Oberfläche 18 des Warmwasserspeichers 2 gegenüber der Umgebung frei, jedoch wird die Unterseite 21 komplett durch die EPP-Formteile 5 bedeckt.

Die EPP-Formteile 5 weisen im Bereich der Ecken des Warmwasserspeichers 2 bodenseitige Aussparungen auf, durch welche die Standbeine 11a, 11b durchgeführt werden.

Neben den Aussparungen für die Standbeine sind weiter Aussparungen in den Formteilen vorgesehen. Solche Aussparrungen dienen der Durchführung der Zu- und Ableitung 7, 8 des Nutzwassersystems und auch für die Durchführung der Befüllung- bzw. Belüftungsöffnungen 10 des Stahlblechtanks 2.

Ausgehend von der Zuleitung 7 wird ein Stahlwellrohr 3 durch den Stahlblechtank 2 verlegt und tritt an der Ableitung 8 wieder aus diesem heraus. Die Zuleitung 7 und die Ableitung 8 werden thermisch isoliert und wasserdicht ausgebildet.

Das flexible Stahlwellrohr wird erst nach der Fertigstellung des Stahlblechtanks 2 eingeführt und verläuft in einer willkürlichen bzw. zufälligen Lage durch den Tank.

Die Flüssigkeit wird in Pfeilrichtung 24 durch die Zuleitung 7 in das im Warmwasserspeicher 2 befindliche Wellrohr 3 eingeleitet und tritt nach einem Wärmeaustausch wieder aus der Ableitung 8 in Pfeilrichtung 25 aus dem Warmwasserspeicher aus.

In Figur 2 wird eine seitliche Ansicht des Stahlblechtanks 2 mit den Standbeinen 11 ohne EPP-Formteile dargestellt. Da die Standbeine 11b länger sind als die Standbeine 11a, steht der Stahlblechtank 2 in einem Winkel 16 gegenüber dem Untergrund geneigt.

Die an den Eckbereichen des Stahlblechtanks 2 montierten Laschen 14 sind nur beispielhaft für eine Befestigungsart gezeigt. Bei der Verwendung solcher Laschen 14 können die Standbeine 11 einfach eingeschoben werden. Eine zusätzliche Fixierung durch Schraubelemente ist möglich. Die rückseitigen Standbeine 11b sind abgewinkelt dargestellt, können jedoch auch gerade ausgebildet sein.

Die vorderen Standbeine 11a können gerade und an der Aufstandsfläche auf dem Untergrund 26 abgeschrägt sein oder aber abgewinkelt ausgebildet sein.

Auf der Oberfläche 18 des Warmwasserspeichers 2 befindet sich die solarselektive Beschichtung 4. Seitlich des Warmwasserspeichers 2 ist die Ableitung 8 angeordnet, während aus der rechten Seite die Befüllungs- bzw. Bellüftungsöffnungen angeordnet sind.

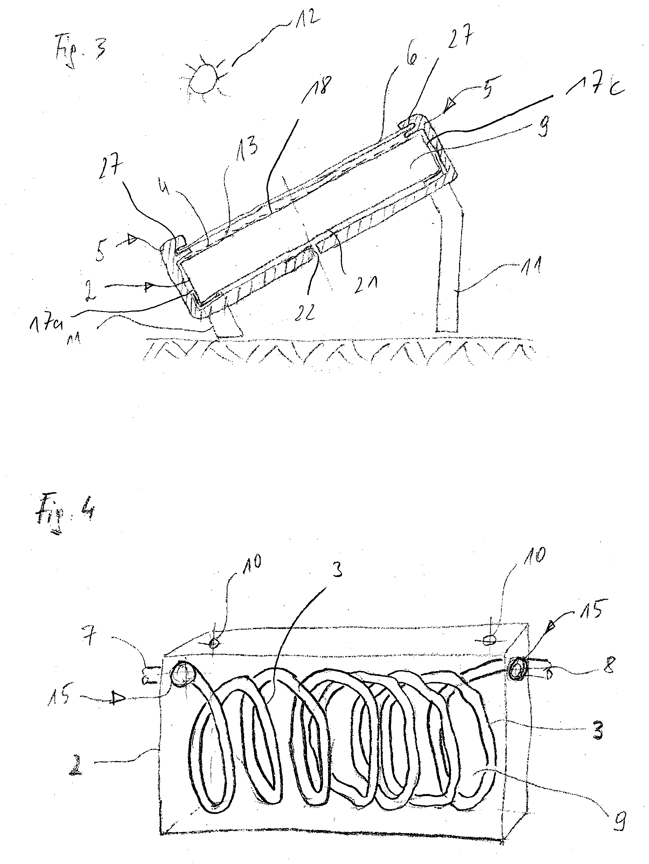

Figur 3 zeigt einen schematischen Schnitt einer Seitenansicht der erfindungsgemäßen Wasseraufbereitungsanlage 1. Die EEP-Formteile sind geschnitten dargestellt, wobei das linksseitige EEP-Formteil die Seite 17a und das rechtsseitige Formteil die Seite 17c des Warmwasserspeichers umschließt. Die einzelnen Formteile ragen über die gesamte Unterseite 21 des Warmwasserspeichers 2 und treffen sich in der Mitte der Unterseite 21 an der Kontaktfläche 22.

An der der Sonne 12 zugewandten Seite des Wasserspeichers 2 lassen die EPP-Formteile 5 zwischen sich die Oberfläche 18 des Warmwasserspeichers frei und lediglich oberseitig d.h. in Richtung der Sonneneinstrahlung über die Seiten 17a-17b des Stahltanks hervor. In diesem überstehenden Bereich weisen die EPP-Formteile eine nutartige Aussparung 27 auf, in die eine transparente Scheibe 6 eingesetzt werden kann.

Der Zwischenraum 13 zwischen der Unterseite der transparenten Scheibe 6 und der solarselektiven Beschichtung 4 der sonnenseitigen Seite (Oberfläche 18) des Stahlblechtanks 2 beträgt je nach Anforderungen und Gegebenheiten zwischen 5 mm bis 70mm, bevorzugt 30 mm.

In Figur 4 ist eine schematische Ansicht des Stahlblechtanks 2 mit dem willkürlich bzw. zufällig angeordneten Wellrohr 3 und der Zu- und Ableitung 7, 8 des Wellrohrs in den Stahlblechtank 2 gezeigt. Die Einbringung des mindestens einen Edelstahlwellrohrs 3 erfolgt erst nach der Fertigstellung des Stahlblechtanks 2, wobei das Wellrohr durch eine der Öffnungen 7, 8 eingeführt wird.

Nach Einbringung des Wellrohrs 3 wird dieses über ein EPDM-Dichtelement 15 abgedichtet.

Nach der Anbringung und Abdichtung des Wellrohrs kann der Stahlblechtank 2 mit Wasser oder einem Wasser-Additivgemisch befüllt werden. Dieser Befüllvorgang erfolgt üblicherweise erst nach der Montage der thermosolaren Warmwasseraufbereitungsanlage 1. Anschließend werden die Befüllungsöffnungen 10 von einem stopfenartigen Verschlusselement 28 verschlossen, welche zum Druckausgleich des Stahlblechtanks Belüftungslöcher 29 aufweisen. Durch diese Belüftungslöcher 29 kann überschüssiger Druck aus dem Inneren des Tanks in die Umgebung abgegeben werden. Jedoch sind die Belüftungslöcher 29 in ihrem Lochmaß so gewählt, dass keine Verdunstung des im Inneren des Tanks befindlichen Wassers gegenüber der Umgebung stattfindet.

Statt der Verwendung von im Durchmesser verringerten Belüftungslöchern können auch Lippenventile oder gegen Federlast sich öffnende Ventile verwendet werden.

### Zeichnungslegende

- 1.: Thermosolare Wasseraufbereitungsanlage
- 2.: Stahlblechtank
- 3.: Wellrohr
- 4.: Solarselektive Beschichtung
- 5.: EPP-Formteil
- 6.: Transparente Scheibe
- 7.: Zuleitung
- 8.: Ableitung
- 9.: Wasser bzw. Wassergemisch bzw. Wärmespeichermedium
- 10.: Befüllöffnungs- bzw. Belüftungsöffnungen
- 11.: Standbeine 11a, 11b
- 12.: Sonne
- 13.: Zwischenraum
- 14.: Laschen bzw. Taschen
- 15.: Dichtelement
- 16.: Winkel
- 17.: Seiten 17a-17d
- 18.: Oberseite
- 19.: Kontaktfläche 19a-19d
- 20.: Aussparung
- 21.: Unterseite
- 22.: Kontaktfläche
- 23.: Untergrund
- 24.: Pfeilrichtung
- 25.: Pfeilrichtung
- 26.: nutartige Aussparung
- 27.: nutartige Aussparung
- 28.: Verschlusselement
- 29.: Belüftungsöffnung
- 30.: Öffnung

## Patentansprüche

1. Thermosolare Wasseraufbereitungsanlage (1 ) mit einem geschlossenen Tank als Warmwasserspeicher, dessen sonnenseitige Oberseite (18) von einer transparenten Scheibe (6) bedeckt ist, durch welche die Sonnenstrahlen hindurch strahlen und eine Flüssigkeit (9) im Inneren des Tanks erwärmen,
wobei die Flüssigkeit (9) die durch die Sonnenstrahlen aufgenommene Energie an einen im Tank angeordneten Wärmetauscher (3) abgibt,
wobei der Tank ein drucklos betriebener Tank ist, der in einer wärmeisolierenden Halterung aus aufgeschäumten EPP Kunststoff- Formteilen (5) gehalten ist,
wobei die Formteile (5) leicht zusammengesteckt und miteinander verbunden werden können,
wobei die Formteile (5) um den Außenumfang des Tanks angeordnet sind,
wobei der Tank an seiner sonnenzugewandten Seite durch eine transparente Scheibe (6) abgedeckt ist und zwischen der transparenten Scheibe (6) und der Oberseite (18) eine solarselektive Beschichtung (4) angeordnet ist, und
wobei der Wärmetauscher mindestens ein von Nutzwasser durchfließbares Wellrohr (3) aus Edelstahl ist.

2. Thermosolare Wasseraufbereitungsanlage (1) nach Anspruch 1,
**dadurch gekennzeichnet, dass** das mindestens eine Wellrohr (3) einen Durchmesser zwischen 10 mm und 30 mm und eine Länge zwischen 10 m und 30 m aufweist und drucktechnisch bis mindestens 10 bar beständig ist.

3. Thermosolare Wasseraufbereitungsanlage (1) nach Anspruch 1 oder 2, **dadurch gekennzeichnet, dass** der Tank als Stahlblechtank (2) ausgebildet ist und aus einem Stahlblech mit einer Blechdicke von 0,1 bis 2,0 mm gefertigt ist und mittels Laserschweißtechnik verschweißt ist.

4. Thermosolare Wasseraufbereitungsanlage (1) nach einem der Ansprüche 1 bis 3, **dadurch gekennzeichnet, dass** die sonnenseitige solarselektive Beschichtung einen IR-Absorptionsgrad von 70% bis 95% und einen IR-Reflexionsgrad Epsilon von 90% bis 5% aufweist.

5. Thermosolare Wasseraufbereitungsanlage (1) nach Anspruch 3, **dadurch gekennzeichnet, dass** vier identische EPP-Formteile (5) verbaut sind, die an der Oberseite (18) des Stahlblechtanks (2) die Scheibe (6) in zueinander gerichtete, nutartige Aussparungen (26, 27) halten.

6. Thermosolare Wasseraufbereitungsanlage (1) nach einem der Ansprüche 1 bis 5, **dadurch gekennzeichnet, dass** die transparente Scheibe (6) zur solarselektiven Beschichtung (4) der Oberseite (18) des Stahlblechtanks (2) einen Abstand von 5 mm bis 70 mm aufweist.

7. Thermosolare Wasseraufbereitungsanlage (1) nach Anspruch 3 oder 5, **dadurch gekennzeichnet, dass** die Zuleitung (7) und die Ableitung (8) des Wellrohrs (3) durch die Seiten (17a-17d) des Stahlblechtanks (2) mittels EPDM-Dichtelementen (15) abgedichtet sind.

8. Thermosolare Wasseraufbereitungsanlage (1) nach einem der Ansprüche 3, 5 oder 7, **dadurch gekennzeichnet, dass** die Zuleitung (7) und die Ableitung (8) des Wellrohrs (3) nur einer Seite (17 a-d) des Stahlblechtanks (2) geführt sind und mittels EPDM-Dichtelementen (15) abgedichtet sind.

9. Thermosolare Wasseraufbereitungsanlage (1) nach einem der Ansprüche 1 bis 8, **dadurch gekennzeichnet, dass** die transparente Scheibe (6) aus Glas besteht.

10. Thermosolare Wasseraufbereitungsanlage (1) nach einem der Ansprüche 1 bis 9, **dadurch gekennzeichnet, dass** die transparente Scheibe (6) aus einem eisenoxidfreiem thermisch behandeltem Solarglas mit einer Dicke von 2,0 bis 3,2 mm besteht.

11. Thermosolare Wasseraufbereitungsanlage (1) nach einem der Ansprüche 1 bis 10, **dadurch gekennzeichnet, dass** die transparente Scheibe (6) aus einer Polycarbonat -Stegplatte besteht.

12. Thermosolare Wasseraufbereitungsanlage (1) nach einem der Ansprüche 3, 5, 7 oder 8, **dadurch gekennzeichnet, dass** zwischen der transparenten Scheibe (6) und der Oberseite (18) des Stahlblechtanks (2) eine Polycarbonat-Stegplatte oder eine Kunststofffolie mit UV-transparenten und UV-stabilisierten Bereichen angeordnet ist.

13. Thermosolare Wasseraufbereitungsanlage (1) nach einem der Ansprüche 3, 5, 7, 8 oder 12, **dadurch gekennzeichnet, dass** der Stahlblechtank (2) Befüllungsöffnungen (10) zum Einfüllen von Wasser (5) aufweist.

14. Thermosolare Wasseraufbereitungsanlage (1) nach einem der Ansprüche 1 bis 13, **dadurch gekennzeichnet, dass** die Befüllungsöffnung (10) von einem stopfenartigen Verschlusselement (28) verschlossen ist, das ein Belüftungsloch (29) aufweist.

15. Thermosolare Wasseraufbereitungsanlage (1) nach einem der Ansprüche 3, 5, 7, 8, 12 oder 13, **dadurch gekennzeichnet, dass** an der Unterseite (21) des Stahlblechtanks (2) Taschen (14) aus Stahlblech ausgebildet sind, in denen Standbeine (11) zum Aufstellen der Wasseraufbereitungsanlage (1) auf einem Untergrund (23) befestigt sind.

16. Thermosolare Wasseraufbereitungsanlage nach einem der Ansprüche 3, 5, 7, 8, 12, 13 oder 15, **dadurch gekennzeichnet, dass** der Stahlblechtank (2) aufgrund durch unterschiedliche Länge der Standbeine (11) schräg auf dem Untergrund (23) aufstellbar ist.

17. Verfahren zur Herstellung einer thermosolaren Wasseraufbereitungsanlage (1) nach einem der Ansprüche 1 bis 16, wobei der Tank ein Stahlblechtank (2) ist, der mittels Laserschweißung wasserdicht und lunkerfrei verschweißt ist und wobei erst nach der Fertigstellung des geschlossenen Stahlblechtanks (2) das Stahlwellrohr (3) über Öffnungen (30) in den Tank eingebracht und willkürlich verlegt wird.

## Claims

1. Thermosolar water treatment plant (1) having a closed tank as the hot water store, the sun-side upper side (18) of which is covered by a transparent pane (6) through which the sun's rays shine and heat a liquid (9) in the interior of the tank, wherein the liquid (9) releases the energy absorbed by the sun's rays to a heat exchanger (3) arranged in the tank, wherein the tank is a tank operated without pressure and is held in a heat-insulating mounting made of foamed EPP plastic mouldings (5), wherein the mouldings (5) may be fitted together slightly and connected to one another, wherein the mouldings (5) are arranged around the outer circumference of the tank, wherein the tank is covered on its side facing the sun by a transparent pane (6) and a solar-selective coating (4) is arranged between the transparent pane (6) and the upper side (18), and wherein the heat exchanger is at least one corrugated pipe (3) made of stainless steel through which service water can flow.

2. Thermosolar water treatment plant (1) according to claim 1, **characterised in that** the at least one corrugated pipe (3) has a diameter between 10 mm and 30 mm and a length between 10 m and 30 m and is resistant to pressure up to at least 10 bar.

3. Thermosolar water treatment plant (1) according to claim 1 or 2, **characterised in that** the tank is formed as a sheet steel tank (2) and is manufactured from a sheet steel having a sheet width of 0.1 to 2.0 mm and is welded by means of laser welding technology.

4. Thermosolar water treatment plant (1) according to one of claims 1 to 3, **characterised in that** the sun-side solar-selective coating has a degree of IR absorption of 70% to 95% and a degree of IR reflection epsilon of 90% to 5%.

5. Thermosolar water treatment plant (1) according to claim 3, **characterised in that** four identical EPP mouldings (5) are used which hold the pane (6) in groove-like recesses (26, 27) directed towards one another on the upper side (18) of the sheet steel tank (2).

6. Thermosolar water treatment plant (1) according to one of claims 1 to 5, **characterised in that** the transparent pane (6) has a distance of 5 mm to 70 mm from the solar-selective coating (4) of the upper side (18) of the sheet steel tank (2).

7. Thermosolar water treatment plant (1) according to claim 3 or 5, **characterised in that** the supply line (7) and the discharge line (8) of the corrugated pipe (3) are sealed by the sides (17a-17d) of the sheet steel tank (2) by means of EPDM sealing elements (15).

8. Thermosolar water treatment plant (1) according to one of claims 3, 5 or 7, **characterised in that** the supply line (7) and the discharge line (8) of the corrugated pipe (3) are guided only on one side (17 a-d) of the sheet steel tank (2) and are sealed by means of EPDM sealing elements (15).

9. Thermosolar water treatment plant (1) according to one of claims 1 to 8, **characterised in that** the transparent pane (6) consists of glass.

10. Thermosolar water treatment plant (1) according to one of claims 1 to 9, **characterised in that** the transparent pane (6) consists of an iron oxide-free thermally treated solar glass having a thickness of 2.0 to 3.2 mm.

11. Thermosolar water treatment plant (1) according to one of claims 1 to 10, **characterised in that** the transparent pane (6) consists of a polycarbonate ribbed panel.

12. Thermosolar water treatment plant (1) according to one of claims 3, 5, 7 or 8, **characterised in that** a polycarbonate ribbed panel or a plastic film having UV-transparent and UV-stabilised regions is arranged between the transparent pane (6) and the upper side (18) of the sheet steel tank (2).

13. Thermosolar water treatment plant (1) according to one of claims 3, 5, 7, 8 or 12, **characterised in that** the sheet steel tank (2) has filling openings (10) for adding water (5).

14. Thermosolar water treatment plant (1) according to one of claims 1 to 13, **characterised in that** the filling opening (10) is closed by a stopper-like closure element (28) which has a ventilation hole (29).

15. Thermosolar water treatment plant (1) according to one of claims 3, 5, 7, 8, 12 or 13, **characterised in that** pockets (14) made of sheet steel, in which supporting legs (11) for erecting the water treatment plant (1) on a base (23) are attached, are formed on the underside (21) of the sheet steel tank (2).

16. Thermosolar water treatment plant according to one of claims 3, 5, 7, 8, 12, 13 or 15, **characterised in that** the sheet steel tank (2) can be erected to be inclined on the base (23) due to the different lengths of the supporting legs (11).

17. Method for producing a thermosolar water treatment plant (1) according to one of claims 1 to 16, wherein the tank is a steel sheet tank (2) which is welded by means of laser welding to be watertight and cavity-free and wherein only after the closed sheet steel tank (2) has been completed is the steel corrugated pipe (3) introduced into the tank via openings (30) and laid arbitrarily.

## Revendications

1. Installation de traitement d'eau thermosolaire (1) comprenant un réservoir fermé en tant qu'accumulateur d'eau chaude, dont le côté supérieur côté soleil (18) est couvert d'une plaque transparente (6) à travers laquelle les rayons du soleil rayonnent et chauffent un fluide (9) à l'intérieur du réservoir,
le fluide (9) transmettant l'énergie absorbée grâce aux rayons du soleil à un échangeur de chaleur (3) disposé dans le réservoir,
le réservoir étant un réservoir fonctionnant sans pression qui est retenu dans un support calorifuge fait de pièces formées en matière plastique EPP (5) expansées,
les pièces formées (5) pouvant être facilement emboîtées ensemble et reliées les unes aux autres,
les pièces formées (5) étant disposées autour du pourtour extérieur du réservoir,
le réservoir étant couvert d'un côté tourné vers le soleil d'une plaque transparente (6) et un revêtement solaire sélectif (4) étant disposé entre la plaque transparente (6) et le côté supérieur (18), et
l'échangeur de chaleur étant au moins un tuyau ondulé (3) en acier spécial apte à être traversé par de l'eau industrielle.

2. Installation de traitement d'eau thermosolaire (1) selon la revendication 1, **caractérisée en ce que** le au moins un tuyau ondulé (3) présente un diamètre entre 10 mm et 30 mm et une longueur entre 10 m et 30 m et est résistant en matière de technique de pression jusqu'à au moins 10 bar.

3. Installation de traitement d'eau thermosolaire (1) selon la revendication 1 ou 2, **caractérisée en ce que** le réservoir est conformé en un réservoir en tôle d'acier (2) et est fabriqué à partir d'une tôle d'acier d'une épaisseur de tôle de 0,1 à 2,0 mm et est soudé au moyen d'une technique de soudage au laser.

4. Installation de traitement d'eau thermosolaire (1) selon l'une des revendications 1 à 3, **caractérisée en ce que** le revêtement solaire sélectif côté soleil présente un degré d'absorption d'IR de 70 % à 95 % et un degré de réflexion d'IR Epsilon de 90 % à 5 %.

5. Installation de traitement d'eau thermosolaire (1) selon la revendication 3, **caractérisée en ce que** quatre pièces formées EPP (5) identiques sont utilisées, qui tiennent la plaque (6) du côté supérieur (18) du réservoir en tôle d'acier (2) dans des évidements en forme de rainures (26, 27) dirigés l'uns vers l'autre.

6. Installation de traitement d'eau thermosolaire (1) selon l'une des revendications 1 à 5, **caractérisée en ce que** la plaque transparente (6) présente un écartement de 5 mm à 70 mm par rapport au revêtement solaire sélectif (4) du côté supérieur (18) du réservoir en tôle d'acier (2).

7. Installation de traitement d'eau thermosolaire (1) selon la revendication 3 ou 5, **caractérisée en ce que** la conduite d'arrivée (7) et la conduite d'évacuation du tuyau ondulé (3) sont rendues étanches par les côtés (17a-17d) du réservoir en tôle d'acier (2) à au moyen d'éléments d'étanchéité EPDM (15).

8. Installation de traitement d'eau thermosolaire (1) selon l'une des revendications 3, 5 ou 7, **caractérisée en ce que** la conduite d'arrivée (7) et la conduite d'évacuation (8) du tuyau ondulé (3) sont guidées d'un seul côté (17 a-d) du réservoir en tôle d'acier (2) et sont rendues étanches au moyen d'éléments d'étanchéité EPDM (15).

9. Installation de traitement d'eau thermosolaire (1) selon l'une des revendications 1 à 8, **caractérisée en ce que** la plaque transparente (6) est constituée de verre.

10. Installation de traitement d'eau thermosolaire (1) selon l'une des revendications 1 à 9, **caractérisée en ce que** la plaque transparente (6) est constituée d'un verre solaire traité thermiquement et sans oxyde de fer d'une épaisseur de 2,0 à 3,2 mm.

11. Installation de traitement d'eau thermosolaire (1) selon l'une des revendications 1 à 10, **caractérisée en ce que** la plaque transparente (6) est constituée d'une plaque à nervures en polycarbonate.

12. Installation de traitement d'eau thermosolaire (1) selon l'une des revendications 3, 5, 7 ou 8, **caractérisée en ce qu'**entre la plaque transparente (6) et le côté supérieur (18) du réservoir en tôle d'acier (2) est disposée une plaque à nervures en polycarbonate ou un film en matière plastique avec des zones transparentes aux UV et stabilisées aux UV.

13. Installation de traitement d'eau thermosolaire (1) selon l'une des revendications 3, 5, 7, 8 ou 12, **caractérisée en ce que** le réservoir en tôle d'acier (2) présente des ouvertures de remplissage (10) pour le remplissage avec de l'eau (5).

14. Installation de traitement d'eau thermosolaire (1) selon l'une des revendications 1 à 13, **caractérisée en ce que** l'ouverture de remplissage (10) est obturée par un élément d'obturation du type bouchon (28) qui présente un trou d'aération (29).

15. Installation de traitement d'eau thermosolaire (1) selon l'une des revendications 3, 5, 7, 8, 12 ou 13, **caractérisée en ce que** du côté inférieur (12) du réservoir en tôle d'acier (2) sont formées des poches (14) en tôle d'acier, dans lesquelles sont fixés des pieds (11) pour poser l'installation de traitement de l'eau thermosolaire (1) sur une base (23).

16. Installation de traitement d'eau thermosolaire selon l'une des revendications 3, 5, 7, 8, 12, 13 ou 15, **caractérisée en ce que** le réservoir en tôle d'acier (2), du fait des longueurs différentes des pieds (11), peut être posé en biais sur la base (23).

17. Procédé pour la fabrication d'une installation de traitement d'eau thermosolaire (1) selon l'une des revendications 1 à 16, dans laquelle le réservoir est un réservoir en tôle d'acier (2) qui est soudé par soudage au laser de manière étanche à l'eau et sans retassures et dans lequel ce n'est qu'après la production du réservoir en tôle d'acier fermé (2) que le tuyau ondulé en acier (3) est inséré par des ouvertures (30) dans le réservoir et installé arbitrairement.
